# EUROPEAN PATENT SPECIFICATION

(11) **EP 1 657 145 B1**
(45) Date of publication and mention of the grant of the patent: **27.05.2015**
(21) Application number: 05023317.0
(22) Date of filing: 25.10.2005
(51) Int. Cl.: B62H 1/02

(54) **Parking stand for a two-wheeled vehicle**
Parkhalter für Zweiräder
Support de stationnement pour véhicules à deux roues

(30) Priority: 11.11.2004 US 987012
(43) Date of publication of application: 17.05.2006
(73) Proprietor: SHIMANO INC., Osaka 590-8577 (JP)
(72) Inventor: Masui, Takuji, Osaka 590-0801 (JP); Hayakawa, Shun, Osaka, 560-0005 (JP)
(74) Representative: Grosse Schumacher Knauer von Hirschhausen

(56) References cited:
- WO-A-00/68064
- DE-A1- 10 239 139
- DE-U1- 20 021 038
- DE-U1- 20 215 603
- US-A- 4 580 804
- US-A- 5 607 173

## Description

### Field of the Invention

The present invention relates generally to parking stands for two-wheeled vehicles, and more particularly, to extendible parking stands.

### Background of the Invention

Two-wheeled vehicles such as bicycles and motorcycles frequently use parking stands or kick-stands as a means of supporting the vehicle when it is parked. Such known parking stands typically comprise an elongated member which is pivotally attached to a vehicle frame at a first end. The elongated member typically has a free end for contacting the ground when the vehicle is parked. While the vehicle is being ridden, the parking stand is typically secured parallel to the vehicle frame to avoid interfering with the vehicle's travel, and in the case of a bicycle, to avoid interfering with the rotation of the pedals. When the vehicle is parked, the free end of the parking stand is pivoted downward to a parking position such that the free end engages the ground. In the parking position, the free end is typically spaced apart from the vehicle frame so that the angle of orientation between the parking stand and the frame is sufficient to support the vehicle's weight and prevent it from falling over.

When riding a bicycle, it is sometimes desirable to leave the parking stand in the parking position while the bicycle is pushed forward or backward. To accomplish this, it is desirable to ensure that while in the parking position, the parking stand does not interfere with the rotational orbit of the pedals. Otherwise, the rotation of the wheels will cause the pedals to rotate until one of them abuts against the parking stand, preventing the rider from moving the bicycle further.

Known parking stands frequently have a fixed length. However, the parking stand length that is necessary to support the vehicle when it is parked may be undesirably long when the vehicle is being ridden. While extendible parking stands have been developed, they frequently require the rider to use his or her hands to adjust the stand length. This adjustment can be particularly difficult to make, especially if the rider needs to support the weight of the vehicle while making it.

WO 00/68064 shows a parking stand according to the preamble of claim 1 of the invention. The parking stand has a first member, and a second member arranged axially movable and rotatable relative to the first member. The first member has a slot with a slope in the axial direction. The second member comprises a boss fixedly attached to the second member, and configured to engage the slot of the first member. The boss projects through the slot. An axially arranged spring is provided to bias the second member relative to the first member in an axial direction. Thereby the boss engages axially recessed end portions of the slot at axial end positions, and the parking stand is locked in compact and extended positions, respectively, against movement in one axial direction. The second member of this park stand is not fixedly locked to the first member in the end positions against movement in any of the axial directions.

DE 2002 10 38 A shows a parking stand with adjustable length. A first member has an outer thread, and a second member has an inner thread to engage with the outer thread of the first member. A protrusion is arranged on the first member to be biased against the second member and to engage an aperture in the first member. The protrusion and the aperture are configured to prevent rotational movement of the first and second members relative to each other in a compact position.

Thus, a need has arisen for a parking stand that addresses the foregoing issues.

### Summary of the Preferred Embodiments

In accordance with a first aspect of the present invention according to claim 1, a parking stand is provided. The parking stand comprises first and second members. One of said first and second members is rotatable relative to the other of said first and second members. The first member has a first member axis defining an axial direction, and further has a first member slot with a slope in the axial direction. The second member has a second member boss, and the second member boss is engaged with the first member slot, such that rotating of one of the first and second members about the first member axis causes the rotated member to move in the axial direction relative to the other of the first and second members. The parking stand has a compact position and an expanded position. The first member slot includes a first end aperture and a second end aperture located at opposite ends of the first member slot. A boss biasing spring is provided to bias the second member boss Through an aperture in a direction away from an outer surface of the second member. In the compact position, the second member boss projects through the first end aperture of the first member slot, and thereby releasably locks the parking stand in the compact position.

In further preferred embodiments, the first member and second members each have an inner surface and an outer surface, the boss projects away from the outer surface of one of the first and second members, and the slot is defined in the inner surface of the other of the first and second members.

In still other preferred embodiments, the second member has a support portion spaced apart from the first member, and the support portion projects away from the first member axis. In yet other preferred embodiments, the rotation of the second member causes the boss to travel along the slot.

In other preferred embodiments, the second end of the slot has a second end aperture, and in the expanded position, the boss projects through the second end aperture.

### Brief Description of the Drawings

The invention may be more readily understood by referring to the accompanying drawings in which:
FIG. 1 is a partial side elevational view of a bicycle frame with a parking stand in both parking position and riding position, in accordance with a general embodiment;
FIG. 1a is a detail view of the parking stand of FIG. 1;
FIG. 2 is an exploded view of parking stand in accordance with a first preferred embodiment of the present invention;
FIG. 2a is a cross-sectional view taken along the line x-x in FIG. 2;
FIG. 3 is an exploded view of a parking stand in accordance with a second preferred embodiment of the present invention;
FIG. 4 is a bottom plan view of the parking stand of FIG. 1 in the riding position as viewed from the rear of the bicycle;
FIG. 4a is a side elevation view of a portion of the parking stand of FIGS. 1 and 4 in the parking position;
FIG. 5 is a side elevation view of a bicycle crank and a portion of the parking stand of FIG. 1; and
FIG. 6 is an exploded view of a sixth preferred embodiment of a parking stand in accordance with the present invention.

Like numerals refer to like parts throughout the several views of the drawings.

### Detailed Description of the Preferred Embodiments

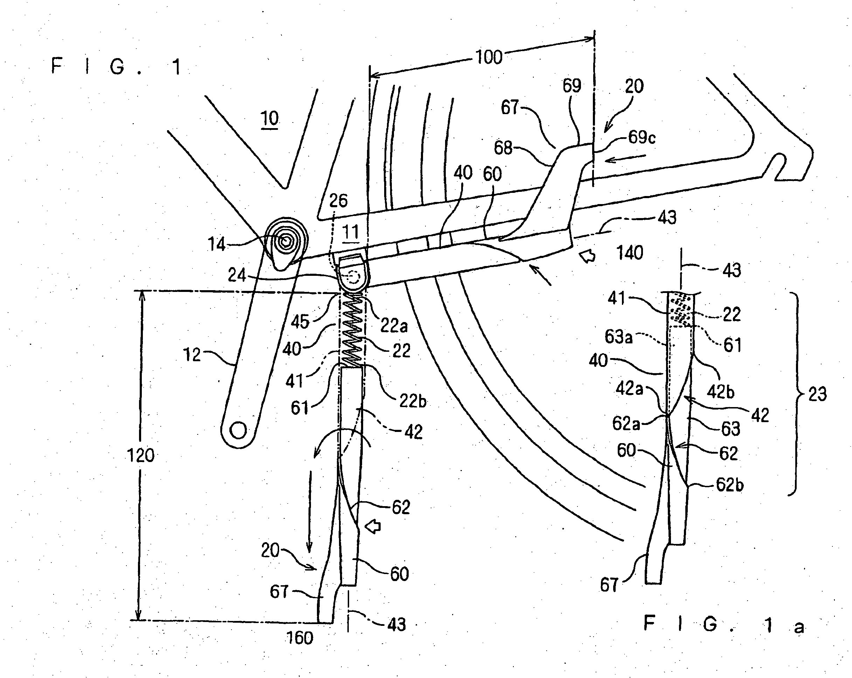

Referring to FIG. 1, a bicycle having a frame 10 with a parking stand is provided to illustrate a general embodiment. Frame 10 includes crank 12 with pedal 13 (not shown). To ride the bicycle, the rider rotates crank 12 about crank axis 14. The rotation of crank 12 rotates the rear wheels of the bicycle via a chain and sprocket assembly (not shown) or other known means.

To facilitate parking and storage of the bicycle, parking stand 20 is provided. The parking stand depicted in FIG. 1 may be used with a variety of different vehicles, and is particularly well-suited for use with two-wheeled vehicles, such as bicycles and motorcycles.

Parking stand 20 is preferably constructed from known materials, such as aluminum or steel. Parking stand 20 is preferably pivotally attached at a first end 45 to a pivot bracket 24 by a pin or other known device suitable for pivotal attachment, and pivot bracket 24 is fixedly attached to frame 10. FIG. 1 shows parking stand 20 in two different positions, a riding position 140 and a parking position 160. While in riding position 140, parking stand 20 is positioned such that it is substantially parallel to frame 10 and adjacent frame member 11, with its free-end, ground engaging end 69a, positioned away from the ground. In contrast, while in the parking position 160, parking stand 20 is substantially perpendicular to adjacent frame member 11. To move parking stand 20 from the riding position 140 to the parking position 160, the rider preferably applies a clockwise rotational force (when viewing the parking stand from the side of the bicycle depicted in FIG. 1) to parking stand 20 sufficient to pivot it about pivot axis 26.

Parking stand 20 is preferably designed to have a compact position 100, and an expanded position 120. In accordance with this embodiment, parking stand 20 is adjustable between two lengths, with a shorter length defining compact position 100 and a longer length defining expanded position 120. As described further below, the parking stand 20 of this embodiment is adjustable between compact position 100 and expanded position 120 by rotatably adjusting a portion of parking stand 20.

Referring to FIG. 1a, parking stand 20 has an elongated cylindrical portion 23 and a laterally projecting portion 67. Parking stand 20 further comprises a proximal member 40, located proximally to pivot bracket 24, and a distal member 60, located distally from pivot bracket 24.

As shown in FIGS. 1 and 1a, proximal member 40 is preferably an elongated, partially-cylindrical member having a longitudinal axis 43. Proximal member 40 also has an axially sloping edge 42 which is spaced apart from first end 45. Edge 42 has a point 42a which is at a maximum distance from first end 45 and a point 42b which is at a minimum distance from first end 45.

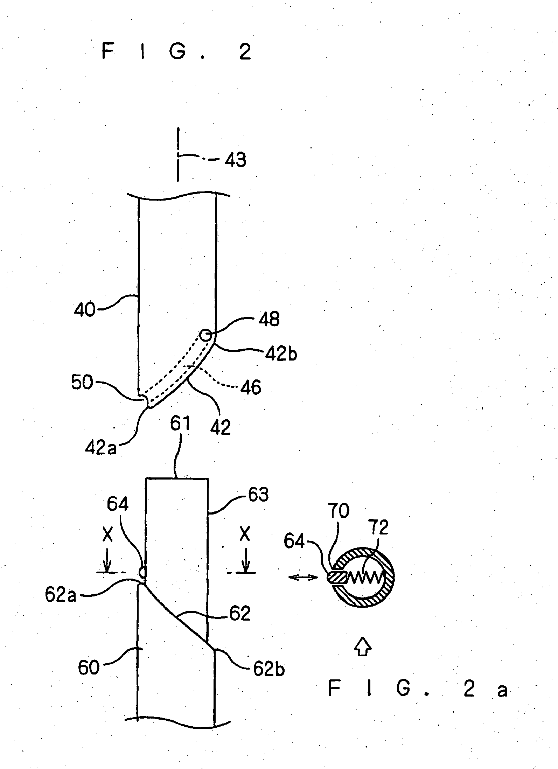

Distal member 60 has a first end 61 located on a cylindrical portion 63. Proximal member 40 preferably includes an interior space 41 which is hollow and which is dimensioned to accommodate a portion 63a of distal member 60 (shown in phantom in FIG. 2) therein. More preferably, portion 63a of distal member 60 which is disposed in interior space 41 is concentric with proximal member 40 and has the same longitudinal axis 43 as proximal member 40. A biasing spring 22 is preferably located in interior space 41. Spring 22 is preferably attached at a first end 22a to first end 45 of proximal member 40 in the interior space 41. Spring 22 is preferably attached at a second end 22b to an outer surface of first end 61 of distal member 60 to connect distal member 60 to proximal member 40. Spring 22 preferably biases distal member 60 towards proximal member 40. Spring 22 is attached to proximal member 40 and distal member 60 by any suitable means known in the art. Spring 22 is also preferably selected and attached so as to minimize rotational biasing of distal member 60 with respect to proximal member axis 43.

As with the proximal member 40 of this embodiment, distal member 60 also has an axially sloping edge 62 formed along its length away from first end 61 and facing toward proximal member 40. Edge 62 is preferably integrally formed with distal member 60 and preferably has a slope with respect to axis 43. As a result, edge 62 has a first point 62a which is at a minimum distance from first end 61 and a second point 62b which is at a maximum distance from first end 61.

As mentioned above, in the embodiment of FIGS. 1 and 1a, proximal member 40 is preferably hollow and distal member 60 is partially disposed within it. As a result, engagement edge 62 is spaced apart from first end 61 of distal member 60. However, as will be apparent to those of ordinary skill in the art, the structures of proximal member 40 and distal member 60 could be reversed such that proximal member 40 is partially disposed within distal member 60.

In accordance with this general embodiment, distal member 60 is rotatable about axis 43 and is rotatable with respect to proximal member 40. The rotation of distal member 60 about proximal member axis 43 causes distal member 60 to move away from proximal member 40 in the direction of proximal member axis 43.

As mentioned above, proximal member 40 and distal member 60 of this preferred embodiment each have engagement edges 42 and 62 which abuttingly engage one another. In accordance with this embodiment, proximal member 40 is not rotatable about proximal member axis 43. Because proximal member 40 is not rotatable, when distal member 60 is rotated about proximal member axis 43, distal member engagement edge 62 begins to travel along proximal member engagement edge 42. Because engagement edges 42 and 62 are sloped in the axial direction with respect to axis 43, as distal member 60 is rotated, its engagement edge 62 abuttingly engages engagement edge 42 at variable axial locations along proximal member 40. This engagement at variable axial locations causes distal member 60 to move axially with respect to proximal member 40. For example, when the parking stand 20 is in its compact position 100, point 62a on the engagement edge 62 of distal member 60 engages point 42b on the engagement edge 42 of proximal member 40. As distal member 60 is rotated about axis 43, point 62a contacts proximal member 40 at points along engagement edge 42 which are progressively farther from first end 45 of proximal member 40. Once points 62a and 42a abuttingly engage one another, the axial movement of distal member 60 is at its maximum. At that point, reversing the rotation of distal member 60 will cause distal member 60 to axially move closer to proximal member 40.

As shown in FIGS. 1 and 1a, distal member 60 and proximal member 40 are preferably unthreaded. Thus, the parking stand 20 of this embodiment allows for rotational adjustment of the parking stand's length without the need for threadedly engaging distal member 60 with proximal member 40.

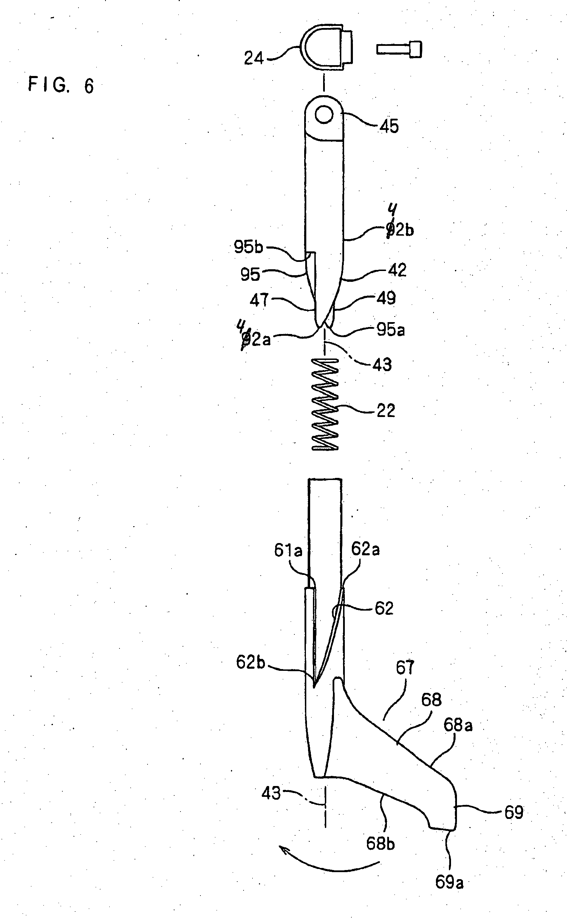

In the general embodiment of FIG. 1, point 42a on proximal member 40 and the point 62a are shaped or designed to keep parking stand 20 in the expanded position 120 until it is desired return it to compact position 100. In one embodiment, depicted in FIG. 6, lower peak 42a is notched to engage upper peak 62a on the engagement edge 62 of distal member to provide this functionality. Alternatively, peaks 42a and 62a may be relatively flat so that they stably abut one another when parking stand 20 is in its expanded position 120.

In the general embodiment of FIGS. 1 and 1a, engagement edge 42 has a single lower peak 42a and engagement edge 62 has a single upper peak 62a. However, alternate profiles which utilize axially sloped engagement edges may be used. For example, in the preferred embodiment of FIG. 6, proximal member 40 has two axially sloped edges 42 and 95, each having its own lower and upper peaks, 42a and 42b, and 95a and 95b, respectively. In addition, proximal member 40 has two vertically linear engagement edges 47 and 49. Distal member 60 has two axially sloped edges 62 and 65 (not shown) which abuttingly engage the corresponding engagement edges 42 and 95 on proximal member 40. Distal member 60 similarly includes two corresponding vertically linear engagement edges 61a and 61b (not shown). In the embodiment of FIG. 6, when parking stand 20 is in its compact position 100, distal member may only be rotated about axis 43 in the direction indicated by the arrow in FIG. 6 (i.e., clockwise when viewed from above). The abutting engagement of linear edges 61a and 47 and the abutting engagement of linear edges 61 b and 49 prevents the rotation of distal member 60 in the opposite direction when starting from compact position 100.

Referring to FIG. 2, a parking stand 20 is described in accordance with a preferred embodiment of the present invention. As with the previous embodiment, the parking stand 20 of FIG. 2 has a compact state 100 and an expanded state 120, as well as a riding position 140 and a parking position 160. Proximal member 40 is partially cylindrical and includes engagement edge 42 which is sloped with respect to proximal member axis 43. Biasing spring 22 (not shown in FIG. 2) is also preferably included and is attached as described with respect to FIGS. 1 and 1a to bias distal member 60 toward proximal member 40. Again, distal member 60 includes a cylindrical portion 63 and an axially-sloped edge 62 spaced apart from first end 61.

To further facilitate the rotational engagement of distal member 60 with proximal member 40, proximal member 40 includes a slot 46 (shown in phantom). As shown in the figure, slot 46 is preferably integrally formed in the inner surface of proximal member 40 and is sloped in the axial direction. It is especially preferred that proximal member 40 include two apertures or through-bores 48 and 50 located at opposite ends of slot 46. Distal member 60 preferably includes a boss 64 or other protrusion located on its cylindrical portion 63 and above its engagement edge 62. Boss 64 and slot 46 are dimensioned to engage one another such that boss 64 may slidably travel along slot 46.

As best seen in FIG. 2a, distal member 60 preferably includes an aperture 70 through which boss 64 projects. Even more preferably, a boss biasing spring 72 is provided to bias boss 64 through aperture 70 in a direction away from the outer surface of distal member 60.

When the parking strand 20 of FIG. 2 is assembled and in its compact state 100, the biasing action of boss biasing spring 72 causes boss 64 to project through aperture 48 of the inner surface of proximal member 40, thereby releasably locking parking stand 20 into compact state 100. As distal member 60 is rotated, boss 64 is pressed inward of aperture 48 by the inner surface of proximal member 40. Boss 64 then begins to travel along slot 46 towards aperture 50. The engagement of boss 64 with axially-sloped slot 46, as well as the engagement of engagement edges 42 and 62 causes distal member 60 to move away from proximal member 40 in the direction of axis 43. Once boss 64 reaches aperture 50, rotation is complete and the biasing action of boss biasing spring 72 causes boss 64 to project through aperture 50, thereby releasably locking parking stand 20 into its expanded position 120.

A number of different configurations of engagement edges and/or slots and bosses may be used without departing from the scope and spirit of the present invention, and the embodiments described herein are merely preferred. However, it is especially preferred that distal member 60 and proximal member 40 are configured such that the parking stand can be adjusted from its compact state 100 to its expanded state 120 by rotating one of the members 40 or 60 about axis 43.

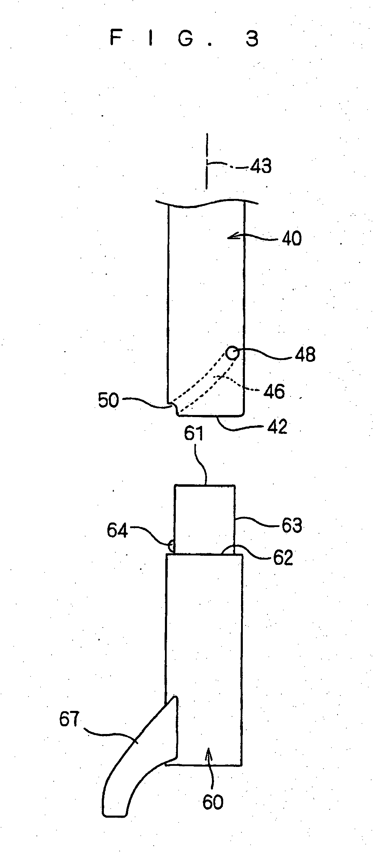

Referring to FIG. 3, a parking stand in accordance with a second preferred embodiment of the present invention is described. Although not shown in the figure, biasing spring 22 is again included and attached as described with respect to FIGS. 1, 1 a and 2. Unlike the embodiments of FIGS. 1, 1a and 2, the engagement edges 42 and 62 are not sloped with respect to proximal member axis 43. However, like the embodiment of FIG. 2, proximal member 40 includes an axially-sloped slot 46 defined in its inner surface, and distal member 60 includes a boss projecting away from its outer surface. Cylindrical portion 63 is inserted in interior space 41 of proximal member 40 such that boss 64 engages slot 46. Thus, when distal member 60 is rotated about axis 43, boss 64 travels along slot 46. Because of the axial slope of slot 46, distal member 60 engages proximal member 40 at variable axial positions, causing distal member 60 to move axially. As with the embodiment of FIG. 2, parking stand 20 is in its compact position 100 when boss 64 is engaged with aperture 48 and is in its expanded position 120 when boss 64 is engaged with aperture 50.

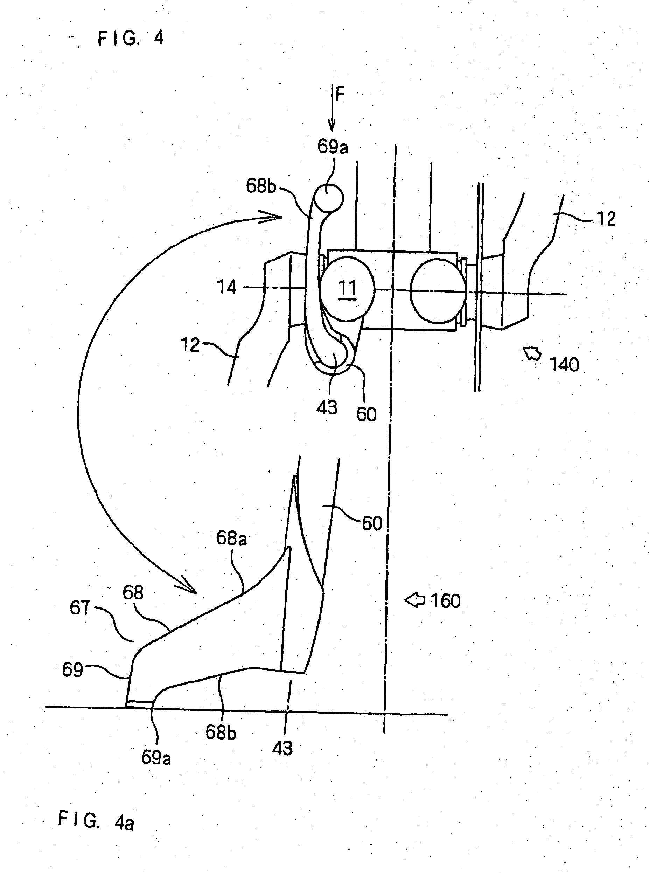

As best seen in FIGS. 1 and 4a, parking stand 20 includes a support portion 67. Support portion 67 is preferably located at an end of parking stand 20 that is away from pivot axis 26 and distal member first end 61. Support portion 67 also preferably projects away from axis 43. It is further preferred that support portion 67 is integrally formed with distal member 60 such that it is rotatable with distal member 60.

As best seen in FIG. 4a, support portion 67 includes a projecting portion 68, which preferably has a top edge 68a and a bottom edge 68b. As shown in FIG. 6, the slope of top edge 68a with respect to proximal member axis 43 is preferably greater than the slope of bottom edge 68b.

Support portion 67 also includes a vertically depending portion 69, which is preferably spaced apart from proximal member axis 43. Vertically depending portion 69 is approximately parallel to axis 43 and includes a ground contacting surface 69 which abuts the ground when the parking stand 20 is in the parking position 160. As best seen in FIG. 4, ground contacting surface 69a is preferably circular.

Referring to FIGS. 1 and 4, when parking stand 20 is in the riding position 140 and compact position 100, projecting portion 68 of supporting portion 67 is substantially parallel to frame 10. A bottom plan view of support portion 67 is provided in FIG. 4. In this view, parking stand 20 is in the riding position 140 and in the compact position 100. As the figure indicates, support portion 67 is preferably configured such that it partially wraps around adjacent frame member 11. This shape allows parking stand 20 to be attached to the bottom of adjacent frame member 11, while keeping projecting portion 68 close to and approximately parallel to bicycle frame 10. As FIG. 4 indicates, when parking stand 20 is in the compact position 100 and the riding position 140, parking stand 20 is located sufficiently away from crank 12 that it minimizes or eliminates the likelihood that it will contact the rider's leg or ankle or otherwise impede his or her ability to pedal the bicycle.

FIG. 4a shows the parking stand 20 of this embodiment in the parking position 160. In the parking position 160, support portion 67 projects away from frame 10. It is especially preferred that support portion 67 is substantially perpendicular to frame 10. Ground engaging surface 69a is preferably circular (as shown in FIG. 4) and abuttingly engages the ground to support the vehicle.

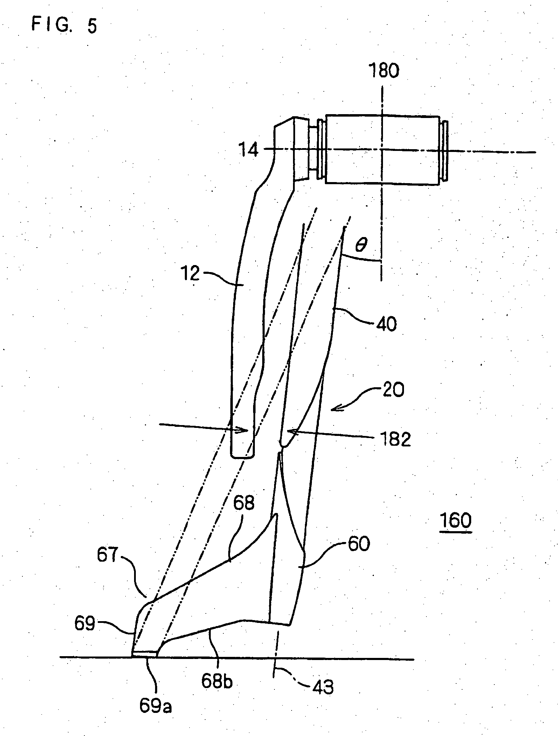

The parking stand 20 of this embodiment advantageously allows crank 12 to be rotated while parking stand 20 is in the parking position 160. Because of the support provided by supporting portion 67, parking stand 20 can provide sufficient support to the vehicle without being angled away from the frame 10 to the same extent required in many known parking stands. As best seen in FIG. 5, frame 10 defines a longitudinal plane 180. The angle 2 defined between the parking stand 20 and longitudinal plane 180 of FIG. 5 is preferably relatively smaller than in known devices, whose orientation is represented in broken lines in the figure. Referring to FIG. 1, the length of crank 12 is longer than the distance between crank axis 14 and pivot axis 11. Thus, the rotational orbit of crank 12 overlaps with the rotational orbit of parking stand 20. However, the parking stand of this embodiment provides a lateral clearance 182 (see FIG. 5) between parking stand 20 and crank 12 which allows crank 12 to be rotated while parking stand 20 is in the parking position 160, notwith-standing the overlapping rotational orbits of crank 12 and parking stand 20. As a result, riders may walk the bicycle forward or backward without having to place parking stand 20 in riding position 140, providing added convenience.

A preferred embodiment of a method of using a parking stand in accordance with the present invention will now be described.

While riding a vehicle on which parking stand 20 is installed, the rider preferably maintains parking stand 20 in the riding position 140 shown in FIGS. 1 and 4. As further indicated in FIG. 1, parking stand 20 is also preferably in its compact position 100 while the vehicle is being ridden. When the rider desires to park the vehicle, he preferably applies a clockwise pivotal force to distal member 60. This pivotal force will cause parking stand 20 to pivot about pivot axis 26 and will move parking stand 20 to the parking position 160. Pivot bracket 24 is preferably configured to restrain the range of clockwise pivot beyond the parking position 160 shown in FIG. 1, for example, by including an abutment in pivot bracket 26 which prevents the rider from pivoting parking stand 20 beyond a predetermined limit.

It is especially preferred that while applying the foregoing rotational force, the rider also applies a rotational force to distal member 60 which is directed about proximal member axis 43. In the specific embodiment depicted in FIGS. 1 and 4, the rotational force would be applied in a direction that is counterclockwise with respect to proximal member axis 43 when viewing parking stand 20 from the rear of the vehicle, i.e., when viewing the bottom of supporting portion 67. As a result of the engagement of axially-sloped engagement edges 42 and 62, this rotational force will adjust parking stand 20 from the compact position 100 to the expanded position 120.

Although the foregoing method has been described with respect to the parking stand of FIGS. 1 and 1a, the parking stand 20 of FIG. 6 could also be used with the method of this embodiment. However, as explained above, the parking stand of FIG. 6 would only allow the rider to rotate distal member 60 in one direction when starting from the compact position 100. Also, if the parking stand 20 of FIGS. 2-3 were used, the rotational force about axis 43 would cause boss 64 to travel along slot 46. The movement of boss 64 along axially sloped slot 46 would cause the distal member 60 to move axially away from the proximal member 40 in the manner described previously. In performing the method of this embodiment, the rider preferably uses his or her foot to apply the foregoing pivotal and rotational forces to support portion 67 of distal member 60. In the embodiment of FIG. 4, vertically depending portion 69 is positioned above adjacent frame member 11. Thus, by applying a downward force to vertically depending section 69, the rider can pivot parking stand 20 into the parking position 160. Similarly, the positioning of vertically depending portion 69 above adjacent frame member 11 allows the rider to use his or her foot to apply a counterclockwise rotational force to supporting 67.

In an especially preferred embodiment, the rider applies the pivotal and rotational forces to support portion 67 with a single movement of the foot, thereby simultaneously adjusting the parking stand 20 from its riding position 140 and compact position 100 to its parking position 160 and expanded position 120. As best seen in FIG. 4, when parking stand 20 is in its compact position 100 and its riding position 140, vertically depending section 69 is slightly offset from proximal member axis 43 in a direction away from frame 10. As a result, a downward force F may be applied to vertically depending section 69 which will create a torque about both pivot axis 26 and about proximal member axis 43, thereby allowing the concurrent pivoting and rotation of parking stand 20 with a single motion of the foot.

The embodiments described above are exemplary embodiments of the present invention. Those skilled in the art may now make numerous uses of, and departures from, the above-described embodiments without departing from the inventive concepts disclosed herein Accordingly, the present invention is to be defined solely by the scope of the following claims.

## Claims

1. A parking stand (20), comprising:
first and second members (40, 60),
wherein one of said first and second members being rotatable relative to the other of said first and second members (40, 60);
wherein the first member (40) has a first member axis (43) defining an axial direction and further has a first member slot (46) with a slope in the axial direction;
wherein the second member (60) has a second member boss (64), and the second member boss (64) is engaged with the first member slot (46) such that rotating of one of the first and second members (40, 60) about the first member axis (43) causes the rotated member to move in the axial direction relative to the other of the first and second members (40, 60), and wherein the parking stand (20) has a compact position (100) and an expanded position (120),
**characterized in that** the first member slot (46) includes a first end aperture (48) and a second end aperture (50) located at opposite ends of the first member slot (46), and a boss biasing spring (72) is provided to bias the second member boss (64) through an aperture (70) in a direction away from an outer surface of the second member (60) and, in the compact position (100), the second member boss (64) projects through the first end aperture (48) of the first member slot (46), thereby releasably locking the parking stand (20) in the compact position (100).

2. The parking stand (20) of claim 1, wherein the first member (40) is rotatable relative to the second member (60).

3. The parking stand (20) of claim 1, wherein the second member (60) is rotatable relative to the first member (40).

4. The parking stand (20) of claim 1, wherein in the expanded position (120) the boss (64) projects through the second end aperture (50).

5. The parking stand (20) of claim 1, wherein the first member (40) has a first member edge (42) with a slope in the axial direction, the second member (60) has a second member edge (62) with a slope in the axial direction, and the first member edge (42) abuttingly engages the second member edge (62).

6. The parking stand (20) of claim 1, wherein rotating one of the first and second members (40, 60) causes the boss (64) to travel along the slot (46).

7. The parking stand (20) of claim 1, wherein the second member (60) is biased with respect to the first member (40) in the axial direction.

8. The parking stand (20) of claim 7, wherein the second member (60) is biased toward the first member (40).

9. The parking stand (20) of claim 7, wherein the second member (60) is biased away from the first member (40).

10. The parking stand (20) of claim 1, wherein one of the first and second members (40, 60) has a support portion (67) spaced apart from the other of the first and second members (40, 60), and the support portion (67) projects away from the first member axis (43).

11. The parking stand (20) of claim 1, wherein the first member (40) has an inner surface and the second member (60) has an outer surface, the boss (64) projects away from the outer surface of the second member (60), and the slot (46) is defined in the inner surface of the first member (40).

## Patentansprüche

1. Parkständer (20), aufweisend:
erste und zweite Elemente (40, 60),
wobei eines von den ersten und zweiten Elementen rotierbar bezüglich des anderen von den ersten und zweiten Elementen (40, 60) ist;
wobei das erste Element (40) eine erste Elementachse (43) aufweist, die eine Axialrichtung definiert, und weiter einen ersten Elementschlitz (46) mit einer Neigung in der Axialrichtung aufweist;
wobei das zweite Element (60) einen zweiten Element-Rundvorsprung (64) aufweist, und der zweite Element-Rundvorsprung mit dem ersten Elementschlitz (46) in Eingriff ist, derart, dass ein Rotieren des einen von den ersten und zweiten Elementen (40, 60) um die erste Elementachse (43) bewirkt, dass das rotierte Element sich in der Axialrichtung relativ zu dem anderen von den ersten und zweiten Elementen (40, 60) bewegt, und wobei der Parkständer (20) eine kompakte Position (100) und eine expandierte Position (120) aufweist,
**dadurch gekennzeichnet, dass** der erste Elementschlitz (46) eine erste Endöffnung (48) und eine zweite Endöffnung (50) beinhaltet, die sich an entgegengesetzten Enden des ersten Elementschlitzes (46) befinden, und eine Rundvorsprungs-Vorspannfeder (72) vorgesehen ist, um den zweiten Element-Rundvorsprung (64) durch eine Öffnung (70) in Richtung weg von einer Außenfläche des zweiten Elementes (60) vorzuspannen, und in der kompakten Position (100) der zweite Element-Rundvorsprung (64) durch die erste Endöffnung (48) des ersten Elementschlitzes (46) vorsteht, wodurch der Parkständer (20) in der kompakten Position (100) lösbar verriegelt wird.

2. Parkständer (20) nach Anspruch 1, wobei das erste Element (40) relativ zum zweiten Element (60) rotiert werden kann.

3. Parkständer (20) nach Anspruch 1, wobei das zweite Element (60) relativ zum ersten Element (40) rotiert werden kann.

4. Parkständer (20) nach Anspruch 1, wobei in der expandierten Position (120) der Rundvorsprung (64) durch die zweite Endöffnung (50) vorsteht.

5. Parkständer (20) nach Anspruch 1, wobei das erste Element (40) eine erste Elementkante (42) mit einer Neigung in der Axialrichtung aufweist, das zweite Element (60) eine zweite Elementkante (62) mit einer Neigung in der Axialrichtung aufweist, und die erste Elementkante (42) mit der zweiten Elementkante (62) anstoßend in Eingriff ist.

6. Parkständer (20) nach Anspruch 1, wobei ein Rotieren von einem von den ersten und zweiten Elementen (40, 60) bewirkt, dass der Rundvorsprung (64) entlang dem Schlitz (46) läuft.

7. Parkständer (20) nach Anspruch 1, wobei das zweite Element (60) bezüglich des ersten Elements (40) in der Axialrichtung vorgespannt ist.

8. Parkständer (20) nach Anspruch 7, wobei das zweite Element (60) hin zum ersten Elements (40) vorgespannt ist.

9. Parkständer (20) nach Anspruch 7, wobei das zweite Element (60) weg vom ersten Elements (40) vorgespannt ist.

10. Parkständer (20) nach Anspruch 1, wobei eines von den ersten und zweiten Elementen (40, 60) einen Tragabschnitt (67) aufweist, der von dem anderen von den ersten und zweiten Elementen (40, 60) beabstandet ist, und der Tragabschnitt (67) weg von der ersten Elementachse (43) vorsteht.

11. Parkständer (20) nach Anspruch 1, wobei das erste Element (40) eine Innenfläche aufweist und das zweite Element (60) eine Außenfläche aufweist, der Rundvorsprung (64) von der Außenfläche des zweiten Elementes (60) vorsteht, und der Schlitz (46) in der Innenfläche des ersten Elementes (40) definiert ist.

## Revendications

1. Support de stationnement (20) comprenant :
des premier et second éléments (40, 60),
dans lequel l'un desdits premier et second éléments pouvant tourner par rapport à l'autre parmi lesdits premier et second éléments (40, 60) ;
dans lequel le premier élément (40) a un axe (43) de premier élément définissant une direction axiale et a en outre une fente (46) de premier élément avec une inclinaison dans la direction axiale ;
dans lequel le second élément (60) a un bossage (64) de second élément, et le bossage (64) du second élément est mis en prise avec la fente (46) du premier élément de sorte que la rotation de l'un des premier et second éléments (40, 60) autour de l'axe (43) du premier élément amène l'élément entraîné en rotation à se déplacer dans la direction axiale par rapport à l'autre des premier et second éléments (40, 60) et dans lequel le support de stationnement (20) a une position compacte (100) et une position expansée (120),
**caractérisé en ce que** la fente (46) du premier élément a une première ouverture d'extrémité (48) et une seconde ouverture d'extrémité (50) positionnées aux extrémités opposées de la fente (46) du premier élément et un ressort de rappel de bossage (72) est prévu pour solliciter le bossage (64) du second élément à travers une ouverture (70) dans une direction à distance d'une surface externe du second élément (60) et dans la position compacte (100), le bossage (64) du second élément fait saillie à travers la première ouverture d'extrémité (48) de la fente (46) du premier élément, verrouillant ainsi de manière amovible le support de stationnement (20) dans la position compacte (100).

2. Support de stationnement (20) selon la revendication 1, dans lequel le premier élément (40) peut tourner par rapport au second élément (60).

3. Support de stationnement (20) selon la revendication 1, dans lequel le second élément (60) peut tourner par rapport au premier élément (40).

4. Support de stationnement (20) selon la revendication 1, dans lequel, dans la position expansée (120), le bossage (64) fait saillie à travers la seconde ouverture d'extrémité (50).

5. Support de stationnement (20) selon la revendication 1, dans lequel le premier élément (40) a un bord (42) de premier élément avec une inclinaison dans la direction axiale, le second élément (60) a un bord (62) de second élément avec une inclinaison dans la direction axiale, et le bord (42) du premier élément met en prise par butée le bord (62) du second élément.

6. Support de stationnement (20) selon la revendication 1, dans lequel la rotation de l'un parmi les premier et second éléments (40, 60) amène le bossage (64) à se déplacer le long de la fente (46).

7. Support de stationnement (20) selon la revendication 1, dans lequel le second élément (60) est sollicité par rapport au premier élément (40) dans la direction axiale.

8. Support de stationnement (20) selon la revendication 7, dans lequel le second élément (60) est sollicité vers le premier élément (40).

9. Support de stationnement (20) selon la revendication 7, dans lequel le second élément (60) est sollicité à distance du premier élément (40).

10. Support de stationnement (20) selon la revendication 1, dans lequel l'un parmi les premier et second éléments (40, 60) a une partie de support (67) éloignée de l'autre parmi les premier et second éléments (40, 60), et la partie de support (67) fait saillie à distance de l'axe (43) du premier élément.

11. Support de stationnement (20) selon la revendication 1, dans lequel le premier élément (40) a une surface interne et le second élément (60) a une surface externe, le bossage (64) fait saillie à distance de la surface externe du second élément (60) et la fente (46) est définie dans la surface interne du premier élément (40).
